# EUROPEAN PATENT APPLICATION

(11) **EP 4 752 032 A1**
(43) Date of publication of application: **03.06.2026**
(21) Application number: 25215118.8
(22) Date of filing: 12.11.2025
(51) Int. Cl.: B62B 3/06

(54) **A TRANSPORT MEANS**

(30) Priority: 27.11.2024 NL 2039179
(71) Applicant: B.M. Innovaties B.V., 6673 DM Andelst (NL)
(72) Inventor: Moorthamer, Arnold Fredrik Albert, 6673 DM Andelst (NL)
(74) Representative: 't Jong, Bastiaan Jacob

(57) **Abstract**

The invention relates to a transport means for displacing an object with a bottom frame with a rectangular bottom footprint over a ground surface, which bottom frame is provided close to each of the corners with a support such as for instance a castor or a swivel wheel, such as for instance a rolling container, which transport means comprises:
- a frame provided with frame wheels for displacing the transport means over and parallel to the ground surface in a main direction of travel;
- a first lifting device for lifting a first object,
wherein the transport device also comprises a second lifting device for lifting a second object, which first and second lifting device are arranged on the frame and are each displaceable independently between a rest position and a lifting position, wherein the lifting devices are each configured to be in contact with the bottom frame of an object positioned thereabove in the lifting position, and to lie clear thereof in the rest position.

## Description

The present invention relates to a transport means for displacing an object with a bottom frame with a rectangular bottom footprint over a ground surface, which bottom frame is provided close to each of the corners with a support such as a castor or a swivel wheel, such as for instance a rolling container, which transport means comprises:
- a frame provided with frame wheels for displacing the transport means over and parallel to the ground surface in a main direction of travel;
- a first lifting device for lifting a first object.

Using known transport means for for instance rolling containers or other mobile objects with a bottom frame with a rectangular bottom footprint simplifies manoeuvring with the rolling containers. This is particularly important when a rolling container is heavily loaded. Such transport means are often provided with an energized drive, so that height differences and small thresholds or ridges can also be overcome more easily. In addition to transport means serving as a tractive or pushing vehicle, there are also transport means which are provided with a lifting device which lifts the optionally mobile object at least partially off the ground surface.

A drawback of the known transport means is that coupling of the transport means to the mobile object takes a relatively long time, whereby loading and unloading of for instance a truck may be less strenuous, but it still takes up a great deal of or even slightly more time.

It is now an object of the invention to reduce or even wholly obviate the above stated drawbacks.

This object is achieved according to the invention by providing a holder according to the preamble, characterized in that the transport device also comprises a second lifting device for lifting a second object, which first and second lifting device are arranged on the frame and are each displaceable independently between a rest position and a lifting position, wherein the lifting devices are each configured to be in contact with the bottom frame of an object positioned thereabove in the lifting position, and to lie clear thereof in the rest position.

Providing independently controllable lifting devices enables the efficiency of use of the transport means, for instance when loading and unloading a truck, to be greatly increased. Two objects, or more, when more than two lifting devices are provided, can thus be loaded or unloaded in a single transport movement. A large part of the convenience of use and the speed increase is obtained by providing for separately controllable lifting devices instead of increasing any existing lifting surface of a lifting device for a plurality of objects. An object, once placed on the lifting device, hereby remains disconnected from the ground surface and can thus also be manoeuvred as a whole with the transport means when a second or further object is picked up. This can prevent the second or further object having to be manoeuvred relative to the transport means. When loading and unloading for instance rolling containers, it is precisely these manoeuvres that are very strenuous and often result in shoulder injuries.

In order to displace any load over the ground surface in stable manner the frame is provided with at least three frame wheels, preferably at least four. Frame wheels can optionally be provided with a drive in order to ease manoeuvring. An operating handle can be arranged on the frame so that the transport means can be operated in simple manner by a user on foot.

When a lifting device is in the rest position, it is low and narrow enough to pass under a compatible object. When the lifting position is then activated, a part of the lifting device moves upward and lifts the object off the ground surface via contact with the bottom frame. When the first lifting device is in the lifting position and an object is placed thereon, a second object can be picked up with the second lifting device in the rest position. The first lifting device need not be placed in the rest position in between for this purpose. The transport means can then also be positioned with the object to pick up the second or further object, without the second or further object having to be positioned relative to the transport means.

The transport means is preferably applied in mobile objects.

In an embodiment of a transport means according to the invention the first and second lifting device are placed one behind the other, as seen in the main direction of travel.

Providing two lifting devices one behind the other, as seen in the main direction of travel, enables containers disposed in two or more rows to still be loaded onto the transport means. This is relevant particularly in loading and unloading of trucks. It is therefore highly preferred that the lifting devices are also placed mutually in line. In order to increase the stability of the transport means further the lifting devices are preferably centred relative to the area between the frame wheels, so that the centre of gravity lies as centrally as possible relative thereto.

Another embodiment of a transport means according to the invention is a transport device wherein at least one of the lifting devices, preferably all lifting devices, comprise lifting arms which are configured to be in contact with the bottom frame of an object positioned thereabove in the lifting position, and to lie clear thereof in the rest position.

By using lifting arms the lifting device can be adjusted in simple manner to specific requirements for lifting determined objects. Use is particularly made of many rolling containers that are not provided with a load-bearing bottom. The bottom can therefore not be used to lift the relevant rolling container off the ground. For instance in the case of a mesh bottom or a collapsible bottom. The lifting arms are here preferably applied disposed in pairs and opposite each other.

Another embodiment of a transport means according to the invention is a transport means wherein the lifting arms are configured to be in contact with a side edge of the bottom frame in the lifting position, preferably to be in contact with substantially the whole part of the side edge lying between the supports adjacent to the side edge.

Engaging with the lifting arms on a side edge of the bottom frame effectively avoids the lifting forces from having to be transmitted through the bottom of the object. Use is preferably made for this purpose of the part of the relevant side wall lying wholly between the supports, so that stable contact with the bottom frame can be obtained.

In yet another embodiment of a transport means according to the invention the lifting arms move between the rest position and lifting position in a transverse direction substantially perpendicularly of the main direction of travel.

Having the lifting arms move transversely of the main direction of travel makes it possible in the rest position to obtain from a narrow structure sufficient width to support the object for lifting in stable manner during displacement to the lifting position.

In yet another embodiment of a transport means according to the invention the lifting arms are connected to a profiled guide for the purpose of increasing a vertical component of the movement of the lifting arms during displacement between the rest position and the lifting position, preferably increasing a vertical component of the movement of the lifting arms mainly close to the lifting position.

By defining the movement of the lifting arms with a profiled guide the movement can be controlled in simple and robust manner. The profile of the guide can here be selected depending on the object to be lifted. An advantage is here that the movement of the lifting arms between the rest position and the lifting position can for instance take place substantially parallel to the ground surface over for instance a first part-path, and a vertical component of the movement can then be increased close to the lifting position in a second part-path.

An additional advantage of the profiled guide is that the composite movement can be energized with a linear drive in simple manner.

Another embodiment of a transport means according to the invention is a transport means wherein the movement of the lifting arms of a lifting device is synchronized on both sides of the frame.

By synchronizing the movement a uniform lifting movement is also obtained, this in addition to a centering effect on the object for lifting relative to the transport means.

In a further embodiment of a transport means according to the invention the movements of the lifting arms are synchronized in that the lifting arms are mutually connected by means of a rod mechanism.

The rod mechanism preferably comprises here a central element which is rotatable about a first rotation shaft, wherein the respective lifting arms are each coupled to the element symmetrically relative to and at a distance from the rotation shaft by means of a coupling rod.

Application of a central element enables the synchronization of the movement of the lifting arms to be obtained mechanically in simple manner. An actuator can then for instance drive the central element. Owing to the central element, an actuator can also be placed at a greater distance from and outside the line of the movement of the lifting arms in simple manner. The central element can for instance be a disc.

Yet another embodiment of a transport means according to the invention is a transport means wherein a resting width of the lifting devices in the rest position, measured transversely of the main direction of travel, is smaller than a support intermediate distance of two adjacent supports of the object for the purpose of being able to place the lifting device of the transport means under the object therebetween.

Limiting the width of the lifting devices and the transport means transversely of the main direction of travel to a resting width smaller than the distance between two adjacent supports of the object, i.e. the support intermediate distance, enables the transport means to be moved under the object between the supports.

In a preferred embodiment of a transport means according to the invention a lifting width of the lifting devices in the lifting position, measured transversely of the main direction of travel, is here greater than the resting width, preferably corresponding with a width of the bottom frame of the object.

Owing to a greater lifting width, the object can be supported in stable manner once the transport means has been positioned under the object by making contact with the object at a point lying outside of the resting width.

Also according to the invention is an embodiment of a transport means wherein at least one lifting device also comprises a brake actuator for respectively unlocking and locking a braking device of an object.

In order to prevent a braking device of the object from interfering with the transport means, such as for instance when positioning the transport means under the object, at least one lifting device is provided with an actuator for the braking device. This is particularly relevant in for instance loading of a truck. Using the transport means according to the invention enables two or more rows of rolling containers to be loaded simultaneously. Because the braking device of the rolling containers must lock the wheels during the transport, the braking device can be locked with the brake actuator after the rolling container has been placed on the ground surface. The brake actuator here preferably unlocks or locks the braking device when the transport means is respectively placed under the rolling container or removed from thereunder.

These and other features according to the invention are further elucidated with reference to the accompanying drawings.
Figure 1 shows a perspective view of a transport means according to the invention with a rolling container.
Figure 2 shows a side view of a transport means according to the invention with a rolling container.
Figure 3 shows a perspective view of a transport means according to the invention without rolling container.

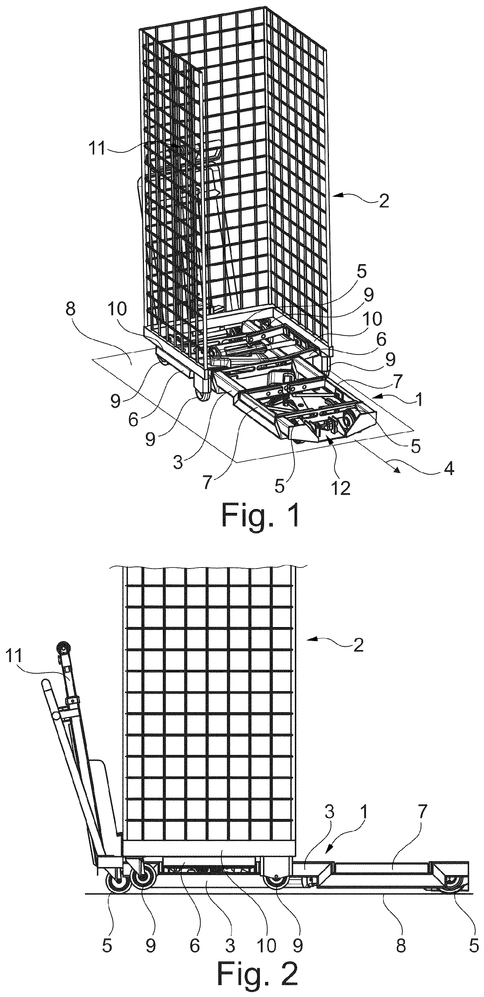

Figure 1 shows a perspective view of a transport means 1 according to the invention with placed thereon a rolling container 2 without bottom. The transport means 1 is provided with an elongate frame 3 with a main direction of travel 4. The frame is also provided with frame wheels 5 for displacing the transport means 1 over a ground surface. The lifting arms 6 of a first lifting device and the lifting arms 7 of a second lifting device are clearly visible. The lifting arms 6 of the first lifting device are in the lifting position, in which the rolling container 2 is lifted off the ground surface 8. The wheels 9 of the rolling container 2 therefore lie clear of the ground. The lifting arms 6 engage under a side edge 10 of the lower frame of the rolling container. The lifting arms 7 of the second lifting device are in the rest position and are retracted relative to the frame 3. This enables a second rolling container also to be arranged on transport means 1. An operating handle 11 is provided for operating and steering the transport means 1. Provided on the front side of the second lifting device is a brake actuator 12 which can operate a braking device of the rolling container when the transport means 1 is placed under or removed from under a rolling container.

Figure 2 shows a side view of the transport means 1 according to the invention with a rolling container 2. It is clearly visible in the side view that the wheels 9 are lifted relative to the ground surface 8. The frame wheels 5 rest on the ground surface 8. In the shown rest position the height of the lifting arms 7 of the second lifting device relative to ground surface 8 is lower than the height of the lifting arms 6 of the first lifting device.

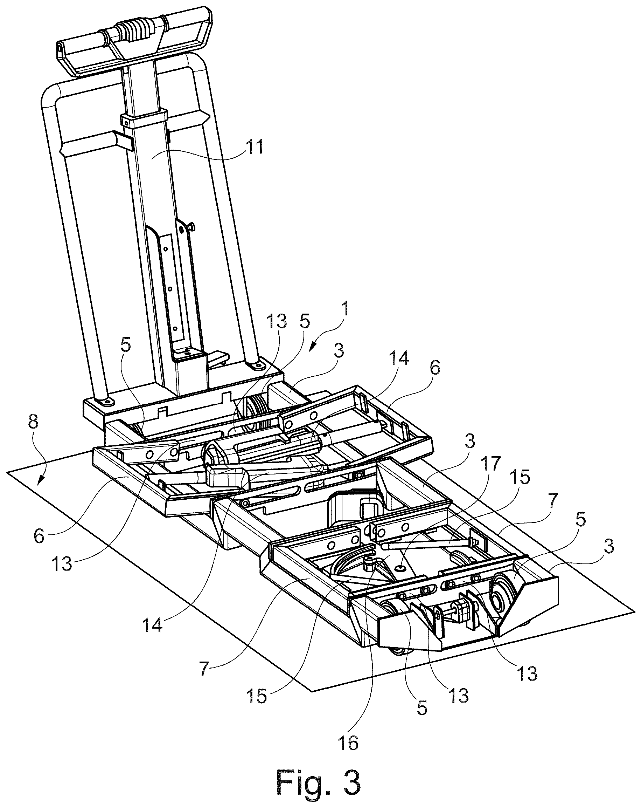

Figure 3 shows a perspective view of the transport means 1 according to the invention without rolling container. The first and the second lifting device are shown in different ways for the purpose of illustration. The lifting arms 6 of the first lifting device are shown in the lifting position. The lifting arms 7 of the second lifting device are shown in the rest position. The lifting arms 6, 7 are connected to a profiled guide 13 for the purpose of making a vertical component of the movement of lifting arms 6, 7 increase during displacement between the rest position and the lifting position.

The lifting arms 6 of the first lifting device are each connected to a linear actuator 14 which are controlled in synchronized manner. In the second lifting device the movements of the lifting arms 7 are synchronized in that the lifting arms 7 are mutually connected with a rod mechanism 15. The rod mechanism 15 is provided with a central element 16 which is rotatable about rotation shaft 17. The coupling rods 15 are coupled to the element 16 symmetrically relative to and at a distance from the rotation shaft 17 for the purpose of synchronizing the movement of the lifting arms 7.

## Claims

1. A transport means for displacing an object with a bottom frame with a rectangular bottom footprint over a ground surface, which bottom frame is provided close to each of the corners with a support such as for instance a castor or a swivel wheel, such as for instance a rolling container, which transport means comprises:
- a frame provided with frame wheels for displacing the transport means over and parallel to the ground surface in a main direction of travel;
- a first lifting device for lifting a first object,
**characterized in that** the transport device also comprises a second lifting device for lifting a second object, which first and second lifting device are arranged on the frame and are each displaceable independently between a rest position and a lifting position, wherein the lifting devices are each configured to be in contact with the bottom frame of an object positioned thereabove in the lifting position, and to lie clear thereof in the rest position.

2. Transport means according to claim 1, wherein the first and second lifting device are placed one behind the other, as seen in the main direction of travel.

3. Transport means according to claim 1 or 2, wherein the lifting device comprises lifting arms which are configured to be in contact with the bottom frame of an object positioned thereabove in the lifting position, and to lie clear thereof in the rest position.

4. Transport means according to claim 3, wherein the lifting arms are configured to be in contact with a side edge of the bottom frame in the lifting position, preferably to be in contact with substantially the whole part of the side edge lying between the supports adjacent to the side edge.

5. Transport means according to claim 4, wherein the lifting arms move between the rest position and lifting position in a transverse direction substantially perpendicularly of the main direction of travel.

6. Transport means according to any one of the claims 3-5, wherein the lifting arms are connected to a profiled guide for the purpose of increasing a vertical component of the movement of the lifting arms during displacement between the rest position and the lifting position, preferably increasing a vertical component of the movement of the lifting arms mainly close to the lifting position.

7. Transport means according to any one of the claims 3-6, wherein the movement of the lifting arms of a lifting device is synchronized on both sides of the frame.

8. Transport means according to claim 7, wherein the movements of the lifting arms are synchronized in that the lifting arms are mutually connected by means of a rod mechanism.

9. Transport means according to claim 8, wherein the rod mechanism comprises a central element which is rotatable about a first rotation shaft, wherein the respective lifting arms are each coupled to the element symmetrically relative to and at a distance from the rotation shaft by means of a coupling rod.

10. Transport means according to any one of the foregoing claims, wherein a resting width of the lifting devices in the rest position, measured transversely of the main direction of travel, is smaller than a support intermediate distance of two adjacent supports of the object for the purpose of being able to place the lifting device of the transport means under the object therebetween.

11. Transport means according to claim 10, wherein a lifting width of the lifting devices in the lifting position, measured transversely of the main direction of travel, is greater than the resting width, preferably corresponding with a width of the bottom frame of the object.

12. Transport means according to any one of the foregoing claims, wherein at least one lifting device also comprises a brake actuator for respectively unlocking and locking a braking device of an object.
